# EUROPEAN PATENT SPECIFICATION

(11) **EP 0 925 896 B1**
(45) Date of publication and mention of the grant of the patent: **05.06.2002**
(21) Application number: 98310752.5
(22) Date of filing: 24.12.1998
(51) Int. Cl.: B29C 33/72, B08B 7/00

(54) **Vulcanization die cleaning method and apparatus**
Verfahren und Vorrichtung zum Reinigen einer Vulkanisierungsform
Procédé et dispositif pour le nettoyage d'un moule de vulcanisation

(30) Priority: 25.12.1997 JP 36722997
(43) Date of publication of application: 30.06.1999
(73) Proprietor: Bridgestone Corporation, Tokyo (JP)
(72) Inventor: Ohno, Shingo, Kodaira-shi, Tokyo (JP)
(74) Representative: Stuart, Ian Alexander

(56) References cited:
- EP-A- 0 618 017
- EP-A- 0 740 989
- EP-A- 0 790 113
- US-A- 5 292 370

## Description

The present invention relates to a method of cleaning a vulcanization die, which has been repeatedly used for vulcanization-molding of a rubber product such as a rubber tire or vibration proof rubber or a plastic product such as an elastomer, by removing a residue of the above material produced on the die by ashing, and to an apparatus used therefor.

An elastomer product, a rubber tire product, a vibration proof rubber product and so forth are produced from a material mainly containing a natural rubber, synthetic rubber, or blend rubber thereof, and these materials are required to be incorporated with additives to ensure necessary characteristics. Examples of these additives include a cross-linking agent such as sulfur, reinforcing agent such as carbon black, vulcanization accelerator, and various chemicals for ensuring various durabilities.

Such an unvulcanized rubber composition containing a rubber component and the above-described additives is vulcanization-molded through a chemical reaction such as a cross-linking reaction induced at a high temperature, generally, nearly at 200°C. The vulcanization-molding performed at such a high temperature not only increases the flowability of the rubber composition, but also gasifies part of the rubber composition. As a result, there inevitably occurs such an inconvenience that the gasified part of the rubber composition and a chemical reaction product thereof in trace quantities are rigidly stuck as a residue not only on the molding surface of the vulcanization die, but also in both a very narrow space between mating faces of divided parts of the die and holes such as a so-called vent hole for taking out an air from each vulcanization-molding. The residue is gradually deposited to a thickness not negligible by repeating the vulcanization-molding a large number of times. Such an inconvenience basically occurs not only for the rubber composition but also for other elastomers.

The vulcanization residue rigidly stuck and deposited on the surface of a vulcanization die must be removed from the die because it exerts adverse effect on the appearance and quality of a molded product.

The method of removing a residue produced on the surface of a vulcanization die by ashing as described above has been known, for example in EP 618 017 A and Japanese Patent Laid-open Nos. Hei. 8-216164, and Hei. 8-244041. The method includes the steps of introducing a reactive gas into a vacuum processing chamber and applying a voltage between two electrodes arranged in the vacuum processing chamber and connected to a high frequency power supply, to generate a plasma of the reactive gas, allowing the plasma to react with an elastomer residue stuck on the surface of a vulcanization die arranged in the vacuum processing chamber, thereby removing the elastomer residue by ashing.

Another method of cleaning a vulcanization die has been known, for example in EP 740 989 A. The method includes the steps of previously generating a plasma of a reactive gas, injecting the plasma of the reactive gas from a number of injection holes formed in a shower pipe to the inner surface of a vulcanization die arranged in a vacuum processing chamber, and allowing the plasma of the reactive gas to react with an elastomer residue stuck on the inner surface of the die, thereby removing the elastomer residue by ashing.

The above-described related art methods of cleaning a vulcanization die by a plasma have been known, however, there are problems. With the former method of cleaning a vulcanization die using a plasma generated by a high frequency capacitive coupling type plasma generator is relatively simple in structure, but is disadvantageous in that the cleaning operation takes a lot of time because of the low plasma density and it requires a large amount of a reactive gas because of the low utilization efficiency of the reactive gas. On the other hand, the method of cleaning a vulcanization die using a high density plasma generated by a manner different from the above one, for example, a microwave down flow type plasma generating manner is disadvantageous in that it becomes difficult to uniformly blow the gas to the entire surface of the die depending on the size of the die, and consequently, it is difficult to clean a large-sized die.

In view of the foregoing, it would be advantageous to provide a method of cleaning a vulcanization die using an apparatus having a simple structure, which is capable of shortening a cleaning time, reducing the supply and discharge amounts of a reactive gas, and effectively cleaning the vulcanization die irrespective of the size and shape of the die; and an apparatus used therefor.

According to an aspect of the present invention, there is provided a method of cleaning a vulcanization die, including the steps of: arranging, in a vacuum processing chamber, an electrode and a vulcanization die which are connected to a high frequency power supply; introducing a reactive gas into the vacuum processing chamber and applying a voltage between the electrode and the vulcanization die, to generate a plasma of the reactive gas; and allowing the plasma to react with an elastomer residue stuck on the surface of the die, thereby removing the elastomer residue by ashing. The method is characterized by further including the steps of: allowing the reactive gas to previously pass through a plasma generated by a microwave cavity resonator, and then introducing the reactive gas excited by the plasma into the vacuum processing chamber.

According to another aspect of the present invention, there is provided an apparatus for cleaning a vulcanization die, including a vacuum processing chamber; an electrode arranged in the vacuum processing chamber; a high frequency power supply connected to the electrode and a vulcanization die placed in the vacuum processing chamber; and a gas introducing pipe connected to the vacuum processing chamber, for introducing a reactive gas into the vacuum processing chamber; wherein a voltage is applied between the electrode and the die to generate a plasma of the reactive gas having been introduced into the vacuum processing chamber, and the plasma is allowed to react with an elastomer residue stuck on the surface of the vulcanization die, thereby removing the elastomer residue by ashing. The apparatus is characterized by further including: a microwave cavity resonator for generating a plasma, arranged in the gas introducing pipe; wherein the reactive gas is previously excited through the plasma generated by the microwave cavity resonator, and is then introduced into the vacuum processing chamber.

According to a further aspect of the present invention there is provided an apparatus for cleaning a vulcanization die as defined in claim 3.

According to the present invention, while a reactive gas is introduced into the vacuum processing chamber through a flow passage and a plasma of the reactive gas is generated by the high frequency capacitive coupling type plasma generator, the microwave cavity resonator for generating a high density plasma is provided in the flow passage through which the reactive gas is introduced. As a result, since the reactive gas is allowed to pass through the high density plasma before being introduced into the vacuum processing chamber, and thereafter the reactive gas thus excited into a more reactive state is introduced into the vacuum processing chamber, whereby radicals in an excited state being high in reactivity can be generated in a large amount in the vacuum processing chamber. This is effective to shorten the cleaning time, and to reduce the supply and discharge amounts of the reactive gas because of the increased gas utilization efficiency. The apparatus of the present invention is also relatively simple in structure and is capable of effectively cleaning a vulcanization die irrespective of the size and shape of the die.

### BRIEF DESCRIPTION OF THE DRAWING

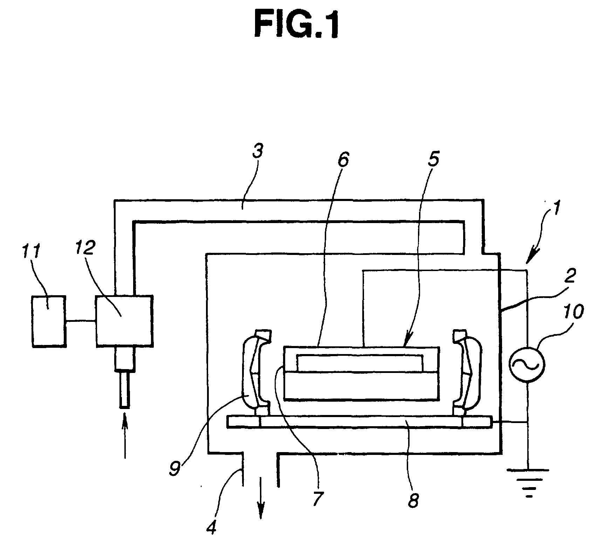

Fig. 1 is a schematic view of a vulcanization die cleaning apparatus according to one embodiment of the present invention.

Hereinafter, a preferred embodiment of the present invention will be described in detail with reference to the accompanying drawing. Referring to Fig. 1, reference numeral 1 denotes a vulcanization die cleaning apparatus according to one embodiment of the present invention. The apparatus 1 is adapted to remove a residue stuck on the surface of a vulcanization die by ashing using a compound plasma flow.

As shown in Fig. 1, the vulcanization die cleaning apparatus 1 is configured such that a gas introducing pipe 3 and a gas discharging pipe 4 are connected to the outer wall of a vacuum processing chamber 2, and a high frequency capacitive coupling type plasma generator 5 is disposed in the vacuum processing chamber 2.

The high frequency capacitive coupling type plasma generator 5 includes a cylindrical electrode 7 held around the outer periphery of a carrier 6; a vulcanization die 9 supported on a surface plate 8 in such a manner as to be separated by a specific distance from the electrode 7 with its inner surface facing to the electrode 7; and a high frequency power supply 10. The electrode 7 is connected to the high frequency power supply 10 via the carrier 6 and the die 9 is connected to the high frequency power supply 10 via the surface plate 8. Here, the die 9 constitutes the counter electrode. While not shown, the carrier 6 may be so configured as described in the Japanese Patent Laid-open No. Hei. 8-216164 or Hei. 8-244041.

The gas introducing pipe 3 includes a microwave cavity resonator 12 connected to a microwave power supply 11.

The process of removing a vulcanization residue stuck on the inner surface of the vulcanization die 9 using the above vulcanization die cleaning apparatus is performed as follows. First, the interior of the vacuum processing chamber 2 is evacuated to a vacuum of 10⁻¹ to 10⁻⁵ Torr, preferably 10⁻¹ to 10⁻³ Torr by operation of a vacuum apparatus (not shown) connected to the gas discharging pipe 4, and a reactive gas is introduced from the gas introducing pipe 3 into the chamber 2. In this case, as the feature of the present invention, the reactive gas is excited into a high reactive state, before being introduced into the chamber 2, by passing through a high density plasma produced by the microwave cavity resonator 12 in the gas introducing pipe 3 and then the reactive gas thus excited is introduced into the chamber 2. Next, a high voltage is applied between the electrode 7 and the vulcanization die 9 by the high frequency power supply 10, to generate a plasma of the reactive gas, which has been excited by the microwave cavity resonator 12, between the electrode 7 and the vulcanization die 9, thereby producing radicals in an excited state being high in reactivity. The plasma reacts with an elastomer residue stuck on the surface of the die, and also the die is heated at a temperature of approximately 150°C to 200°C, whereby the elastomer residue stuck on the surface of the die is removed by ashing for a short period of time.

As the above reactive gas, there is preferably used a single oxygen gas or a mixed gas mainly containing an oxygen gas which is mixed with a halide gas. Preferable examples of the oxygen gases include, but not limited to, O₂ and O₃, and examples of the halide gases include, but not limited to, F (fluorine), CF₄, NF₃, and SF₆.

The flow rate in SCCM (Standard Cubic Centimeters per Minute) of the above reactive gas may be suitably adjusted. For example, in the case of using a mixed gas composed of an oxygen gas and halide gas, the flow rate of the oxygen gas may be set within a range from 100 to 10000 SCCM, preferably 100 to 2000 SCCM and the flow rate of the halide gas may be set within a range from 0 to 50%, preferably 5 to 30% on the basis of the flow rate of the oxygen gas.

The condition for generating a plasma by the microwave cavity resonator may be suitably selected. In particular, the frequency may be set within a range from 300 MHz to 30 GHz, preferably 1 to 10 GHz and the power may be set within a range from 500 W to 20 KW, preferably 1 to 10 KW.

The condition for generating of a plasma by the high frequency capacitive coupling type plasma may be also suitably selected. In particular, the frequency may be set within a range from 10 KHz to 100 MHz, preferably within a range from 1 to 100 MHz and the power may be set within a range from 1 to 20 KW, preferably 5 to 10 KW.

According to the present invention, since the reactive gas is subjected to plasma generating treatment in two-stages, the plasma of the reactive gas can be efficiently generated. In other words, it is possible to avoid the waste of the reactive gas, and hence to reduce the supply and discharge amounts of the reactive gas. And, a high density plasma flow thus attained by the above treatment significantly contributes to improvement in ashing rate upon removal of a residue by ashing.

### EXAMPLE

The present invention will be more clearly described with reference to the following examples, although the present invention is not limited thereto.

### [Experimental Example]

An apparatus having the structure shown in Fig. 1 was used, in which a vulcanization die composed of eight-divided segments (Segment Nos. 1 to 8) and having the maximum inside diameter of 550 mm was arranged around a cylindrical electrode having the outside diameter of 480 mm and the height of 220 mm. A reactive gas composed of an O₂ gas and a CF₄ gas was introduced into a vacuum processing chamber. The flow rate of the O₂ gas was set at 500 SCCM and the flow rate of the CF₄ gas was set at 250 SCCM. That is to say, the ratio between flow rates of O₂ and CF₄ (O₂:CF₄) was set at 2:1. The pressure of the reactive gas was kept at 1.5 Torr.

Then, in such a state, a voltage was applied between the electrode and the vulcanization die under a condition with a frequency of 13.56 MHz and a power of 5 KW, and the die was cleaned for 120 minutes (for Comparative Example).

The same procedure was repeated except that the above mixed gas was allowed to pass through a plasma generated by a microwave cavity resonator under a condition with a frequency of 2.45 GHz and a power of 5 KW before being introduced into the vacuum processing chamber (for Inventive Example).

The temperature, the degree of ashing the residue, and the uniformity of ashing directly after the cleaning for the die were evaluated under the following criterions for each of Segment Nos. 1 to 8 of the die. The results are shown in Table 1.

### Degree of Ashing (Average of Ashing)

The degree of ashing was evaluated on the basis of five grades (Grade 1, 2, 3, 4 and 5). The larger the number gets, the better the ashing state is. The degree of ashing evaluated at Grade 4 or more was rendered acceptable.

### Uniformity of Ashing

The segment from which a residue was substantially uniformly removed by ashing was shown by a mark (○) and the segment from which a residue was not uniformly removed by ashing was shown by a mark ( × ).

**Table 1**

| | Segment No. | Temperature at the end of cleaning | Average of ashing | Uniformity of ashing |
|---|---|---|---|---|
| Comparative Example | 1 | 180°C | 5 | ○ |
| | 2 | 165°C | 5 | ○ |
| | 3 | 175°C | 4 | ○ |
| | 4 | 160°C | 4 | ○ |
| | 5 | 130°C | 3 | × |
| | 6 | 180°C | 5 | ○ |
| | 7 | 175°C | 3 | × |
| | 8 | 180°C | 5 | ○ |
| Inventive Example | 1 | 185°C | 5 | ○ |
| | 2 | 180°C | 5 | ○ |
| | 3 | 170°C | 4 | ○ |
| | 4 | 175°C | 5 | ○ |
| | 5 | 165°C | 4 | ○ |
| | 6 | 185°C | 5 | ○ |
| | 7 | 180°C | 5 | ○ |
| | 8 | 180°C | 4 | ○ |

As is apparent from the results shown in Table 1, it is revealed that the method of the present invention can efficiently, certainly remove, by ashing, an elastomer residue stuck on a vulcanization die for a short period of time, with the reduced supply and discharge amounts of a reactive gas used.

## Claims

1. A method of cleaning a vulcanization die (9) comprising the steps of:
arranging, in a vacuum processing chamber (2), an electrode (7) and a vulcanization die (9) which are connected to a high frequency power supply (10);
introducing a reactive gas into the vacuum processing chamber (2) and applying a voltage between the electrode (7) and the vulcanization die (9) to generate a plasma of the reactive gas; and
allowing the plasma to react with an elastomer residue stuck on the surface of the die (9), thereby removing the elastomer residue by ashing;
**characterised in that** there is a step of:
allowing the reactive gas to previously pass through a plasma generated by a microwave cavity resonator (12) and then introducing the reactive gas excited by the plasma into the vacuum processing chamber (2).

2. An apparatus for cleaning a vulcanization die (9), comprising:
a vacuum processing chamber (2);
an electrode (7) arranged in said vacuum processing chamber (2);
a high frequency power supply (10) connected to said electrode and a vulcanization die (9) placed in said vacuum processing chamber (2); and
a gas introducing pipe (3) connected to said vacuum processing chamber (2), for introducing a reactive gas into said vacuum processing chamber (2);
whereby a voltage is applicable between said electrode (7) and the die (9) to generate a plasma of reactive gas in said vacuum processing chamber (2), for reaction with an elastomer residue stuck on the surface of the die, thereby removing the elastomer residue by ashing;
**characterised in that**:
a microwave cavity resonator (12) for generating a plasma is arranged in said gas introducing pipe (3) whereby a reactive gas is excitable by the plasma generated by said microwave cavity resonator, and is then introducible into said vacuum processing chamber.

3. An apparatus for cleaning a vulcanization die (9), comprising:
a vacuum processing chamber (2);
an electrode (7) arranged in said vacuum processing chamber (2);
support means (8) for supporting a vulcanisation die (9) in said chamber (2);
a high frequency power supply (10) connected to said electrode and adapted to be connected to a vulcanization die (9) when this is supported by said support means (8) in said vacuum processing chamber (2); and
a gas introducing pipe (3) connected to said vacuum processing chamber (2), for introducing a reactive gas into said vacuum processing chamber (2);
whereby a voltage is applicable between said electrode (7) and the die (9) to generate a plasma of reactive gas in said vacuum processing chamber (2), for reaction with an elastomer residue stuck on the surface of the die, thereby removing the elastomer residue by ashing;
**characterised in that**
a microwave cavity resonator (12) for generating a plasma is arranged in said gas introducing pipe (3)
whereby a reactive gas is excitable by the plasma generated by said microwave cavity resonator, and is then introducible into said vacuum processing chamber.

## Patentansprüche

1. Verfahren zum Reinigen einer Vulkanisierungsform (9), folgende Schritte umfassend:
das Anordnen einer Elektrode (7) und einer Vulkanisierungsform (9), die an eine Hochfrequenz-Stromversorgung (10) angeschlossen sind, in einer Vakuumbearbeitungskammer (2);
das Einleiten eines Reaktionsgases in die Vakuumbearbeitungskammer (2) und das Anlegen einer Spannung zwischen der Elektrode (7) und der Vulkanisierungsform (9), um ein Plasma des Reaktionsgases zu erzeugen; und
das Reagieren-Lassen des Plasmas mit einem Elastomerrückstand, der an der Oberfläche der Form (9) klebt, wodurch der Elastomerrückstand durch Veraschung entfernt wird;
**dadurch gekennzeichnet, dass** folgender Schritt durchgeführt wird:
das vorherige Hindurchgehen-Lassen des Reaktionsgases durch ein Plasma, das von einem Mikrowellen-Topfkreis (12) erzeugt wird, und dann das Einleiten des durch das Plasma angeregten Reaktionsgases in die Vakuumbearbeitungskammer (2).

2. Vorrichtung zur Reinigung einer Vulkanisierungsform (9), umfassend:
eine Vakuumbearbeitungskammer (2);
eine Elektrode (7), die in der Vakuumbearbeitungskammer (2) angeordnet ist;
eine Hochfrequenz-Stromversorgung (10), die an die Elektrode und eine Vulkanisierungsform (9) angeschlossen ist, die in der Vakuumbearbeitungskammer (2) angeordnet sind; und
ein Gaseinleitungsrohr (3), das mit der Vakuumbearbeitungskammer (2) verbunden ist, um ein Reaktionsgas in die Vakuumbearbeitungskammer (2) einzuleiten;
wodurch zwischen der Elektrode (2) und der Form (9) eine Spannung angelegt werden kann, um in der Vakuumbearbeitungskammer (2) ein Reaktionsgas-Plasma zur Reaktion mit einem Elastomerrückstand zu erzeugen, der an der Oberfläche der Form klebt, wodurch der Elastomerrückstand durch Veraschung entfernt wird;
**dadurch gekennzeichnet, dass**
ein Mikrowellen-Topfkreis (12) zur Erzeugung eines Plasmas im Gaseinleitungsrohr (3) angeordnet ist,
wodurch ein Reaktionsgas durch Plasma angeregt werden kann, das vom Mikrowellen-Topfkreis erzeugt wird, und dann in die Vakuumbearbeitungskammer eingeleitet werden kann.

3. Vorrichtung zur Reinigung einer Vulkanisierungsform (9), umfassend:
eine Vakuumbearbeitungskammer (2);
eine Elektrode (7), die in der Vakuumbearbeitungskammer (2) angeordnet ist;
Haltemittel (8) zum Halten einer Vulkanisierungsform (9) in der Kammer (2);:
eine Hochfrequenz-Stromversorgung (10), die an die Elektrode angeschlossen ist und so ausgebildet ist, dass sie an eine Vulkanisierungsform (9) angeschlossen wird, wenn diese vom Haltemittel (8) in der Vakuumbearbeitungskammer (2) gehalten wird; und
ein Gaseinleitungsrohr (3), das mit der Vakuumbearbeitungskammer (2) verbunden ist, um ein Reaktionsgas in die Vakuumbearbeitungskammer (2) einzuleiten;
wodurch zwischen der Elektrode (7) und der Form (9) eine Spannung angefegt werden kann, um in der Vakuumbearbeitungskammer (2) ein Reaktionsgas-Plasma zur Reaktion mit einem Elastomerrückstand zu erzeugen, der an der Oberfläche der Form klebt, wodurch der Elastomerrückstand durch Veraschung entfernt wird;
**dadurch gekennzeichnet, dass**
ein Mikrowellen-Topfkreis (12) zur Erzeugung eines Plasmas im Gaseinleitungsrohr (3) angeordnet ist,
wodurch ein Reaktionsgas durch das Plasma angeregt werden kann, das vom Mikrowellen-Topfkreis erzeugt wird, und dann in die Vakuumbearbeitungskammer eingeleitet werden kann.

## Revendications

1. Un procédé de nettoyage d'un moule de vulcanisation (9) prenant les étapes consistant à:
disposer, dans une chambre de traitement sous vide (2), une électrode (7) et un moule de vulcanisation (9) qui sont reliés à une source d'alimentation d'énergie électrique haute fréquence (10);
introduire, dans la chambre de traitement sous vide (2), un gaz réactif et appliquer une tension entre l'électrode (7) et le moule de vulcanisation (9) pour produire un plasma du gaz réactif; et
laisser le plasma réagir avec un résidu élastomère collé sur la surface du moule (9), en éliminant ainsi le résidu d'élastomère par cendrage;
**caractérisé en ce qu'**il existe une étape consistant à :
laisser le gaz réactif passer précédemment à travers un plasma produit par une cavité résonnante (12) et introduire ensuite, dans la chambre de traitement sous vide (2), le gaz réactif excité par le plasma.

2. Un appareil pour le nettoyage d'un moule de vulcanisation (9), comprenant:
une chambre de traitement sous vide (2);
une électrode (7) disposée dans ladite chambre de traitement sous vide (2);
une source d'alimentation électrique haute fréquence (10) reliée à ladite électrode et à un moule de vulcanisation (9) placé dans ladite chambre de traitement sous vide (2); et
une canalisation d'introduction de gaz (3) reliée à ladite chambre de traitement sous vide (2), pour introduire un gaz réactif dans ladite chambre de traitement sous vide (2);
de sorte qu'une tension peut être appliquée entre ladite électrode (7) et le moule (9) pour produire un plasma de gaz réactif dans ladite chambre de traitement sous vide (2), en vue d'une réaction avec un résidu d'élastomère collé sur la surface du moule, en éliminant ainsi le résidu élastomère par cendrage;
**caractérisé en ce que** :
une cavité résonnante (12) pour produire un plasma est disposée dans ladite canalisation d'introduction de gaz (3);
de sorte qu'un gaz réactif peut être excité par le plasma produit par ladite cavité résonnante, et peut ensuite être introduit dans ladite chambre de traitement sous vide.

3. Un appareil pour le nettoyage d'un moule de vulcanisation (9), comprenant:
une chambre de traitement sous vide (2) ;
une électrode (7) disposée dans ladite chambre de traitement sous vide (2);
des moyens de support (8) pour porter, dans ladite chambre (2), un moule de vulcanisation (9) ;
une source d'alimentation électrique haute fréquence (10) reliée à ladite électrode et prévue pour être reliée à un moule de vulcanisation (9) lorsque celui-ci est porté par lesdits moyens de support (8) dans ladite chambre de traitement sous vide (2); et
une canalisation d'introduction de gaz (3) reliée à ladite chambre de traitement sous vide (2), pour introduire un gaz réactif dans ladite chambre de traitement sous vide (2);
de sorte qu'une tension peut être appliquée entre ladite électrode (7) et le moule (9) pour produire un plasma de gaz réactif dans ladite chambre de traitement sous vide (2), en vue d'une réaction avec un résidu d'élastomère collé sur la surface du moule, en éliminant ainsi le résidu d'élastomère par cendrage;
**caractérisé en ce que**:
une cavité résonnante (12) pour produire un plasma est disposée dans ladite canalisation d'introduction de gaz (3) ;
de sorte qu'un gaz réactif peut être excité par le plasma produit par ladite cavité résonnante, et peut ensuite être introduit dans ladite chambre de traitement sous vide.
